# EUROPÄISCHE PATENTSCHRIFT

(11) **EP 3 183 044 B1**
(45) Veröffentlichungstag und Bekanntmachung des Hinweises auf die Patenterteilung: **24.01.2018**
(21) Anmeldenummer: 15723651.4
(22) Anmeldetag: 23.04.2015
(51) Int. Cl.: A63G 21/18, A63G 31/16

(54) **WASSERRUTSCHEN-SYSTEM SOWIE BETRIEBSVERFAHREN**
WATER SLIDE SYSTEM AS WELL AS OPERATING PROCEDURE THEREOF
TOBOGGAN AQUATIQUE ET SON PROCÉDÉ D'EXPLOITATION

(30) Priorität: 21.08.2014 DE 102014111982; 25.11.2014 DE 102014117250
(43) Veröffentlichungstag der Anmeldung: 28.06.2017
(73) Patentinhaber: Klarer Freizeitanlagen AG, 8215 Hallau (CH)
(72) Erfinder: KLARER, Stefan, 8226 Schleitheim (CH)
(74) Vertreter: Patentanwälte Behrmann Wagner PartG mbB
(86) Internationale Anmeldenummer: PCT/EP2015/058844
(87) Internationale Veröffentlichungsnummer: WO 2016/026587

(56) Entgegenhaltungen:
- CN-U- 202 036 787
- GB-A- 2 309 394
- US-A- 4 630 908
- US-A- 5 482 510
- US-A1- 2011 287 848
- US-A1- 2013 032 053
- US-A1- 2013 244 801
- US-B2- 7 762 898

## Beschreibung

Die Erfindung betrifft ein Wasserrutschen-System gemäß dem Oberbegriff des Anspruchs 1 mit einer, bevorzugt umfangsgeschlossenen, zumindest abschnittweise transluzenten oder transparenten Rutschröhre, in welcher eine mit Wasser benetzbare und sich in eine Rutschrichtung erstreckende Rutschfläche für einen Benutzer ausgebildet ist, wobei auf der Außenseite der Rutschröhre vom Inneren der Rutschröhre her sichtbare Leuchtmittel zur Erzielung optischer Effekte im Inneren der Rutschröhre angeordnet sind. Ferner betrifft die Erfindung ein Verfahren zum Betreiben eines Wasserrutschen-Systems gemäß Anspruch 14.

Wasserrutschen-Systeme umfassend eine umfangsgeschlossene Rutschröhre sind hinlänglich bekannt. Zur Generierung von Lichteffekten im Inneren der Röhren ist es bekannt, die Rutschröhren auf ihrer Außenseite mit vereinzelten LEDs, beispielsweise zur Simulation eines Sternenhimmels oder mit einem LED-Band auszustatten. Die erzeugbaren optischen Lichteffekte erschöpfen sich entweder in Blink- oder Dauerlichteffekten.

Aus der US 7,762,898, B2 ist eine Wasserrutsche bekannt, an deren Umfang Leuchtmittel zur Realisierung von Lichteffekten angeordnet sind.

Aus der US 5,482,519 A ist eine Röhre bekannt, die unter anderem auch durchrutschbar ist. Es können verschiedene Lichteffekte, wie z.B. stereoskopisches Licht realisiert werden, um unterschiedliche Stimmungen beim Nutzer zu erzeugen.

Aus der WO 2006/116176 A2 ist eine Wasserrutsche mit einem audiovisuellen Unterhaltungssystem bekannt, wobei mittels eines Projektors in einen Wasservorhang Bilder projiziert werden können.

Die GB 2 309 394 A beschreibt ein Wasserrutschen-System mit einer Rutschröhre, auf deren Außenseite vom Innern der Rutschröhre her sichtbare Leuchtmittel zur Erzielung optischer Effekte im Innern der Rutschröhre angeordnet sind.

Zum weiteren Stand der Technik werden die US 7,762,898 B2, US 2013/244801 A1, US 2011/287848 A1, CN 202036787 U, US 5,482,510 A, US 2013/032053 A1 und US 4,630,908 A genannt.

Ausgehend von dem vorgenannten Stand der Technik liegt der Erfindung die Aufgabe zugrunde zumindest einen Röhrenrutschabschnitt umfassendes Wasserrutschen-System anzugeben, mit dem das Rutscherlebnis für den Benutzer durch die Realisierung aufwändiger optischer Effekte verbessert ist. Insbesondere soll das Wasserrutschen-System derart ausgebildet sein, dass das subjektive Beschleunigungsempfinden bzw. Rutschgeschwindigkeitsempfinden und/oder ein Richtungsempfinden beeinflussbar ist. Ferner besteht die Aufgabe darin, ein Verfahren zum Betreiben eines solches Wasserrutschen-Systems anzugeben.

Diese Aufgabe wird hinsichtlich des Wasserrutschen-Systems mit den Merkmalen des Anspruchs 1 gelöst, d.h. bei einem gattungsgemäßen Wasserrutschen-System dadurch, dass die Leuchtmittel gebildet sind von matrixartig angeordneten Bildpunkten, insbesondere LEDs, mindestens eines auf der Außenseite der Rutschröhre schalenartig angeordneten und/oder ausgebildeten und sich über einen Umfangsabschnitt der Rutschröhre erstreckenden Bildschirmmoduls (LED-Modul bzw. digitale Bildfläche), welches zur Darstellung von in der Umfangsrichtung gekrümmten, zweidimensionalen und/oder stereoskopischen, insbesondere bewegten, Bildern ansteuerbar und/oder angesteuert ist. Bevorzugt sind mehrere solcher jeweils in Umfangsrichtung gekrümmter bzw. schalenartiger Bildschirmmodule in Umfangsrichtung nebeneinander und/oder in der Rutschrichtung hintereinander angeordnet. Hinsichtlich des Betriebsverfahrens wird die Aufgabe mit den Merkmalen des Anspruchs 14 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die Wasserrutsche zumindest abschnittsweise als Bildschirmrutsche auszubilden, also derart, dass vom Inneren der Röhrenrutsche her, d.h. beim Rutschen von einem Benutzer sichtbare, zweidimensionale und/oder stereoskopische, bevorzugt bewegte in der Umfangsrichtung der Rutschröhre gekrümmte Bilder, darstellbar sind, durch welches beispielsweise Einfluss genommen werden kann auf das subjektive Beschleunigungs- und/oder Geschwindigkeitsempfinden und/oder Rutschrichtungsempfinden des Benutzers. So ist es beispielsweise möglich, durch ein sich entgegen der Rutschrichtung bewegendes, insbesondere sich über einen Zeitabschnitt von mehreren Sekunden gleichförmiges bzw. sich Wiederholendes bzw. sich entgegen der Rutschrichtung verschiebendes bzw. wanderndes Bild, beispielsweise in der Form von bewegten Pfeilen oder dgl. einen höheren Geschwindigkeitseindruck zu erzielen als die tatsächliche Rutschgeschwindigkeit. Zusätzlich oder alternativ ist es möglich, visuelle Wechsellicht- und/oder Farbeffekte in Form von zweidimensionalen und/oder stereoskopischen stehenden Bildern oder Filmen (bewegten Bilder zweidimensional und/oder stereoskopisch) darzustellen. Ganz besonders bevorzugt ist eine Ausführungsform, bei der sich das Bild über einen Umfangswinkel von mindestens 120° vorzugsweise von mindestens 180° und/oder über mindestens einen Meter Länge in der Rutschrichtung, besonders bevorzugt über mindestens 5 Meter, noch weiter bevorzugt über mindestens 10 Meter oder länger erstreckt. Ganz besonders bevorzugt beträgt die Auflösung eines Bildschirmmoduls mindestens 100 x 100 Bildpunkte, vorzugsweise 250 x 250 Bildpunkte (Pixel). Ganz besonders bevorzugt ist es, wenn mehrere, eine derartige Auflösung von Bildschirmmodulen vorgesehen sind, vorzugsweise in Umfangsrichtung nebeneinander und in der Rutschrichtung hintereinander, wobei es noch weiter bevorzugt ist, wenn die Bildschirmmodule derart angesteuert sind, dass mit diesen ein Gesamtbild darstellbar ist, wozu die mehreren Bildschirmmodule vorzugsweise signalleitend mit einem sogenannten Videosplitter verbunden sind, der ein Gesamtbild auf die mehreren Bildschirmmodule, d.h. in Bildteilabschnitte, aufteilt.

Durch sich in Umfangsrichtung bewegende Bilder kann zusätzlich oder alternativ ein subjektiver Dreheinrichtungsdruck generiert werden, der dem Benutzer suggeriert, dass er sich in Umfangsrichtung bzw. nach rechts oder links bewegt. Auch ist es möglich, subjektiv den Eindruck einer langsameren Rutschgeschwindigkeit zu vermitteln, indem ein Bildinhalt sich in der Rutschrichtung bewegt. Bevorzugt werden zur Erzielung dieses Effektes zumindest über einen Zeitabschnitt gleiche Bildinhalte gewählt, die sich von Bildpunkt zu Bildpunkt in der gewünschten Richtung weiterbewegen, d.h. von den Ansteuermitteln entsprechend auf ein Bildschirmmodul und bevorzugt von Bildschirmmodul zu Bildschirmmodul verschoben werden.

Damit für den Benutzer ein scharfes Bild resultiert, ist vorgesehen, dass die Rutschröhre abschnittsweise, insbesondere in den mit dem mindestens einen Bildschirmmodul versehenen Bereichen transluzent oder transparent ausgebildet ist. Für eine transparente Ausgestaltung kann beispielsweise Acrylglas verwendet werden.

Bevorzugt ist jedoch eine transluzente, beispielsweise opake Ausgestaltung, da dies eine bevorzugte Ausführungsform ermöglicht, bei der nur die Bildpunkte des mindestens einen Bildschirmsymbols durchscheinen bzw. für den Benutzer sichtbar sind und die übrige Modultechnik im Verborgenen bleibt. Für eine transluzente Ausgestaltung kommen insbesondere die Materialien GFK, Polycarbonat und Plexiglas in Frage.

Neben dem neuartigen Rutscherlebnis bzw. den erzielbaren optischen Effekten ergeben sich überraschende synergistische Effekte. Durch die Integration des mindestens einen Bildschirmsymbols in einem Wasserrutschen-System kann auf geschickte Weise für einen guten Wärmeabtransport von den, vorzugsweise aus LEDs bestehenden Bildpunkten gesorgt werden, insbesondere dann, wenn die Bildpunkte die Außenseite der Rutschröhre unmittelbar kontaktieren d.h. außen an dieser anliegen. Durch den unmittelbaren Kontakt kann Wärme an das, insbesondere transluzente oder transparente Röhrenrutschmaterial abgegeben werden. Dieses ist dann, zumindest abschnittweise wiederum gekühlt durch das in der Wasserrutsche bzw. der Rutschröhre befindliche Rutschwasser. Bevorzugt weist das mindestens eine Bildschirmmodul (LED-Modul/digitale Bildfläche) folgende Mindestspezifikationen auf: Flexdisplay und/oder LED-Pixel pitch 7mm und/oder Pixeldichte (Bildpunktdichte) pro Quadratmeter ≥ 15876 und/oder eine Helligkeit ≥ 5.000nits und/oder einen Stromverbrauch von 250W/m² und/oder einen Blickwinkel von 120° und/oder eine Bildwiederholfrequenz vom ≥ 1.800Hz und/oder eine Feuchtigkeitsbeständigkeit ≥ 99% und/oder ≥ 16.000.000 Farben.

Mit anderen Worten wird somit ein von der Vorderseite mit Wasser gekühlter, gekrümmter Bildschirm erhalten, der die Rutschröhre unmittelbar umgibt.

Ein weiterer wünschenswerter Effekt ist der sich aus Nutzersicht vor dem Bild ergebende Wasserfluss oder Wasserfilm, der interessante Schliereneffekte hervorruft, die durch geeignete Bilder oder Verzerrungstechniken verstärkt oder zumindest bei Bedarf teilweise kompensiert werden können.

Mit anderen Worten, weist das nach dem Konzept der Erfindung ausgebildete Wasserrutschen-System eine Rutschröhre auf, der unmittelbar ein gekrümmter, aus einer Vielzahl von matrixartig angeordneten Bildpunkten zusammengesetzte Bildfläche zugeordnet ist, um dem Benutzer eine Vielzahl neuer Bildeindrücke zu verschaffen. Unter einer matrixartigen Anordnung von Bildpunkten ist dabei zu verstehen, dass Bildpunkte entlang von zwei einem Winkel, insbesondere von 90°, aufspannenden Achsen angeordnet sind, wobei eine der Achsen in der Umfangsrichtung der Rutschröhre gekrümmt ist, insbesondere mit einem dem Krümmungsradius der Rutschröhre entsprechenden Krümmungsradius. Ganz besonders bevorzugt sind die Bildpunkte zeilen- und spaltenartig angeordnet und können individuell angesteuert werden. Die Zeilen erstrecken sich dabei bevorzugt parallel zur Rutschrichtung, während die senkrecht dazu orientierten Spalten von Bildpunkten der Krümmung der Rutschröhre in Umfangsrichtung folgen bzw. diese, insbesondere gestuft, abbilden. Zur möglichst einfachen Gewährleistung eines in Umfangsrichtung gekrümmten und sich gleichzeitig in der Rutschrichtung erstreckenden 2D- und/oder stereoskopischen Bildern ist es bevorzugt, wenn das mindestens eine eingesetzte Bildschirmmodul schalenartig ausgebildet ist. Auf besonders geschickte Weise kann dies erreicht werden durch die Verbindung von jeweils ebenen, insbesondere gelenkig miteinander verbundenen Teilmodulen (Modulflächenabschnitte), wobei jeweils zwei benachbarte Teilmodule einen Winkel einschließen. Bei einer bevorzugten gelenkigen Verbindung von Teilmodulen bzw. Teilbildschirmabschnitten eines Moduls kann dieses in besonders geschickter Art und Weise an den individuellen Radius unterschiedlicher Rutschröhren angepasst werden.

Wie erwähnt, eignet sich das nach dem Konzept der Erfindung ausgebildete Wasserrutschen-System bzw. dessen mindestens eines, bevorzugt schalenartiges Bildschirmmodul zur Darstellung von, bevorzugt gekrümmten, zweidimensionalen Bildern, insbesondere in Form von bewegten Bildern (Film). Ganz besonders bevorzugt ist eine Ausführungsform des Wasserrutschen-Systems, bei welcher auf dem mindestens einen Bildschirmmodul, vorzugsweise den mehreren Bildschirmmodulen, stereoskopische Bilder darstellbar sind und/oder dargestellt werden, insbesondere in Form von stereoskopischen Filmen. Hierdurch wird dem Benutzer ein räumlicher Eindruck von Tiefe vermittelt, der physikalisch (ggf. bis auf die Krümmung) nicht vorhanden ist. Das Prinzip der Stereoskopie beruht darauf, dass ein Benutzer (Mensch) durch seine Umgebung durch seine zwei Augen gleichzeitig aus zwei Blickwinkeln betrachtet. Dadurch kann das Gehirn des Benutzers zu allen betrachtenden Objekten effizient eine Entfernung zuordnen oder ein räumliches Bild seiner Umgebung gewinnen, ohne den Kopf in Bewegung halten zu müssen. Die Stereoskopie bzw. im konkreten Fall die stereoskopische Ansteuerung des mindestens einen Bildschirmmoduls ermöglicht nur, dass in das linke und rechte Auge des Benutzers unterschiedliche (jeweils zweidimensionale) Bilder aus zwei leicht abweichenden Betrachtungswinkeln gebracht werden. Hierzu gibt es unterschiedliche, an sich bekannte, jedoch im Rahmen eines Wasserrutschen-Systems bisher nicht angewandte Verfahren. Wie später noch erläutert werden wird ist es besonders bevorzugt, wenn ein ShutterVerfahren oder alternativ ein 3D-Polarisationssystemverfahren realisiert sind, wobei in beiden Fällen, wie später noch erläutert werden wird, der Benutzer bevorzugt entsprechende Kanaltrennmittel, insbesondere in der Art einer Brille während des Rutschens trägt, um die je nach angewandtem Verfahren gleichzeitig oder nacheinander dargestellten Bilder den unterschiedlichen Augen definiert zuzuordnen. Wesentlich ist jedoch, dass das mindestens eine Bildschirmmodul als sogenanntes Stereodisplay ausgebildet und angesteuert ist, um dem Benutzer ein stereoskopisches Sehen, je nach Verfahren mit oder ohne Kanaltrennhilfsmittel, wie einer entsprechenden Brille, beispielsweise einer Shutterbrille oder einer Polfilterbrille zu ermöglichen.

Besonders bevorzugt werden Röhren mit einem kreisrunden Querschnitt eingesetzt, insbesondere mit einem Durchmesser aus einem Durchmesserbereich zwischen 60cm und 300cm. Alternativ ist es auch möglich, Rutschröhren mit einer von einer Kreisform unterschiedlichen Umfangskontur, beispielsweise Ovalrutschen einzusetzen, wobei hier bevorzugt ein maximaler Durchmesser aus einem Wertebereich aus 60 und 350 und ein senkrecht hierzu verlaufender minimaler Durchmesser aus einem Wertebereich zwischen 50 und 300 gewählt ist.

Ganz besonders bevorzugt ist eine Ausführungsform, bei der mit Hilfe der Bildschirmmodule Bilder in unterschiedlichen, insbesondere wechselnden Farben darstellbar sind, was in besonders geschickter und einfacher Weise dadurch realisierbar ist, dass die Bildpunkte von mehrfarbigen Leuchtdioden gebildet sind, wobei in diesem Fall bevorzugt jede LED zwei, drei oder mehr unterschiedlich farbige LEDs umfasst, wie dies beispielsweise von Großveranstaltungs-LED-Displays grundsätzlich bekannt ist.

Besonders bevorzugt ist es, wenn die bevorzugt im Rahmen des Bildschirmmoduls zum Einsatz kommenden LEDs ein Farbspektrum von mindestens 16.000.000 Farben darstellen können.

Ganz besonders bevorzugt ist eine Ausführungsform des Wasserrutschensystems, bei der das mindestens eine Bildschirmmodul mit einem Videoprozessor umfassenden Ansteuermitteln signalleitend verbunden ist, um das Bildschirmmodul mit einem geeigneten Ansteuersignal zur Darstellung von zweidimensionalen und/oder stereoskopischen, insbesondere mehrfarbigen Bildern zu versorgen. Bevorzugt sind die Ansteuermittel derart ausgebildet, dass diese einen Anschluss zum Verbinden mit einer Bildquelle, insbesondere eine Videoquelle aufweisen und/oder mit einer Bildquelle verbunden sind. Bei der Bild-, insbesondere Videoquelle, kann es sich beispielsweise um einen Medienserver handeln oder im einfachsten Fall um eine geeignete Abspieleinrichtung, wie beispielsweise einen Videospieler, bevorzugt in Form eines Bluray-Spielers oder eines DVD-Spielers. Das Eingangsignal wird dann mit Hilfe der Ansteuermittel in ein, vorzugsweise gemultiplextes Steuersignal zum Ansteuern des Bildschirmmoduls umgewandelt.

Besonders zweckmäßig ist es, wenn das Wasserrutschen-System nicht nur ein einziges Bildschirmmodul umfasst sondern mehrere Bildschirmmodule. Ganz besonders bevorzugt ist es, wenn mehrere, insbesondere jeweils schalenartige, Bildschirmmodule in Umfangsrichtung nebeneinander angeordnet sind, um somit einen möglichst großen Umfangswinkel von vorzugsweise mindestens 120°, noch weiter bevorzugt mindestens 180°, ganz besonders bevorzugt von, zumindest näherungsweise 360° abzudecken.

Zusätzlich oder alternativ zu einer Anordnung mehrerer Bildschirmmodule in Umfangsrichtung ist es möglich und bevorzugt, mehrere Bildschirmmodule in der Rutschrichtung hintereinander anzuordnen.

Als besonders zweckmäßig hat es sich herausgestellt, wenn die Ansteuermittel zum Ansteuern der Bildschirmmodule Videosplittermittel umfassen, mit denen mehrere in Umfangsrichtung nebeneinander angeordnete und/oder in der Rutschrichtung hintereinander angeordnete Bildschirmmodule zur Darstellung eines, insbesondere bewegten, Gesamtbildes, ansteuerbar bzw. angesteuert sind. Mit anderen Worten wird von einer Bildquelle (Signalquelle) bzw. Filmquelle bereitgestellte Bildinformationen aufgeteilt auf mehrere, insbesondere wiederum matrixartig angeordnete Bildschirmmodule.

Ganz besonders bevorzugt ist es, wenn die mehreren, bevorzugt jeweils schalenartigen Bildschirmmodule (analog zu den Bildpunkten eines Bildschirmmoduls) matrixartig angeordnet sind und somit einen Gesamtbildschirm bilden, welcher, wie später noch erläutert werden wird, bevorzugt zur Darstellung eines Gesamtbildes ansteuerbar ist.

Besonders bevorzugt ist es, wenn die Ansteuermittel derart ausgebildet sind, dass ein sich über sämtliche Bildpunkte eines Bildschirmmodul erstreckendes Bild und/oder ein sich über mehrere (insbesondere matrixartig angeordnete) Bildschirmpunkte erstreckender Bildabschnitt in Umfangsrichtung der Rutschröhre und/oder in der Rutschrichtung und/oder entgegen der Rutschrichtung von Bildpunkt zu Bildpunkt und/oder von Bildschirmmodul zu Bildschirmmodul verschiebbar ist. Anders ausgedrückt wird ein, insbesondere zumindest hinsichtlich der Bildinhaltskonturen, gleichbleibender Bildinhalt, in zumindest einer der vorgenannten Richtungen oder eine sich aus mehreren der vorgenannten Richtungen ergebene resultierende, beispielsweise diagonale, Richtung auf einem Bildschirmmodul, vorzugsweise über die Modulgrenzen hinweg, weiter verschoben, wodurch ein Bewegungseindruck vermittelt wird.

So ist es beispielsweise möglich, eine sich in Umfangsrichtung erstreckende Zackengeometrie in oder entgegen der Rutschrichtung weiter zu schieben und dadurch einen Bewegungsablauf darzustellen. Ganz besonders bevorzugt ist es, wenn sich vorgenannter Bildinhalt (oder ein anderer Bildinhalt) wiederholt und die Wiederholung in ihrer Gesamtheit in oder entgegen der Rutschrichtung bewegt wird. Auch ist es möglich, dass ein sich in der Rutschrichtung erstreckender Bildinhalt in Umfangsrichtung weiterverschoben wird.

Wie bereits eingangs angedeutet, ist es besonders bevorzugt, wenn zur Realisierung eines schalenartigen Bildschirmmoduls, dieses mehrere Modulflächenabschnitte aufweist, die vorzugsweise jeweils matrixartig in einer gemeinsamen geraden Ebene angeordnete Bildpunkte oder alternativ jeweils nur eine Reihe von Bildpunkten aufweisen, wobei jeweils zwei benachbarte, ebene Modulflächenabschnitte einen Winkel einschließen, so dass sich in der Gesamtheit der Modulflächenabschnitte ein schalenartiges, sich in Umfangsrichtung um die Rutschröhre erstreckendes Bildschirmmodul ergibt. Besonders bevorzugt ist eine Ausführungsform des Bildschirmmoduls, bei dem Modulflächenabschnitte gelenkig miteinander verbunden sind, um somit eine einfache Anpassung des Bildschirmmoduls und unterschiedliche Krümmungsradien von unterschiedlichen Rutschröhren zu ermöglichen.

Jedenfalls umfasst jeder Modulflächenabschnitt mehrere in der Rutschrichtung hintereinander angeordnete Bildpunkte, wobei die Gesamtheit der Modulflächenabschnitte bzw. die darauf matrixartig oder in einer Reihe angeordneten Bildpunkte die Bildpunktmatrix des mindestens einen Bildschirmmoduls ergeben.

Wie bereits erläutert, ist es einerseits möglich, ein sich über den gesamten Umfang der Rutschröhre erstreckendes Bild zu realisieren. Alternativ ist es realisierbar nur über einen Teilumfangsabschnitt der Rutschröhre ein Bild durch die Anordnung mindestens eines Bildschirmmoduls, vorzugsweise mehrerer in Umfangsrichtung nebeneinander angeordneter Bildschirmmodule zu realisieren. Ganz besonders bevorzugt ist es bei der letztgenannten Ausgestaltung, wenn der nicht mit Bildschirmmodulen besetzte Umfangswinkelabschnitt, zumindest teilweise, vorzugsweise vollständig, spiegelnd ausgebildet ist, beispielsweise durch die Integration einer Spiegelfolie in die Rutschröhre. Hierdurch wird eine besonders kostengünstige Möglichkeit geschaffen ein sich zumindest näherungsweise über den gesamten Umfang erstreckendes Gesamtbild zu erzeugen, da sich in der Spiegelfläche die Bilder des mit Bildschirmmodulen besetzen Teilabschnittes spiegeln.

Zur Gewährleistung einer optimierten Wärmeabfuhr der, vorzugsweise von LEDs gebildeten Bildpunkte hat es sich als besonders vorteilhaft erwiesen, wenn die matrixförmigen Bildpunkte, insbesondere LEDs, unmittelbar auf der Außenseite der auf der Innenseite zumindest abschnittweise mit Wasser beaufschlagten Rutschröhre anliegen. Hierdurch kann die Wärmeleitfähigkeit des Wassers zusätzlich für den Wärmeabtransport genutzt werden.

Das Wasserrutschensystem zeichnet sich insbesondere durch mindestens eine Pumpe umfassende Befeuchtungsmittel zum Befeuchten der Rutschfläche auf. Hier gibt es grundsätzlich unterschiedliche Möglichkeiten. Besonders bevorzugt ist es, wenn auf der Rutschfläche ein sichtbarer Wasserstrom, insbesondere von mehreren Millimetern Höhe erzeugt wird, der entlang der Röhrenrutsche fließt.

Zusätzlich oder alternativ ist es möglich, zumindest abschnittsweise lediglich einen Feuchtigkeitsfilm zu erzeugen, beispielsweise durch das Einbringen von Feuchtigkeit, d.h. Wasser mit Hilfe von Sprühdüsen. Diese Ausgestaltung ermöglicht insbesondere auch in einem oberen Röhrenabschnitt angeordnete Bildschirmmodule optimal zu kühlen.

Wie eingangs bereits ausgeführt ist eine Ausführungsform des Wasserrutschen-Systems besonders bevorzugt, bei der das Bildschirmmodul als stereoskopisches Display ausgebildet und mit zur gleichzeitigen oder zeitversetzten Darstellung von zwei, für das linke und rechte Auge eines Benutzers unterschiedlichen, sich insbesondere hinsichtlich des Betrachtungswinkels des dargestellten Bildinhalts unterscheidenden, Bildern zum Erzielen eines dreidimensionalen Seheindrucks ansteuerbar und/oder angesteuert ist. Entsprechende stereoskopisch aufbereitete Bildinhalte werden dabei von einer Bildquelle, beispielsweise einem Medienserver und/oder einer Abspieleinrichtung bereitgestellt. Die leicht unterschiedlichen, jeweils zweidimensionalen, ggf. aufgrund der bevorzugten Bildschirmmodulkrümmung gekrümmten Bilder werden dann im Gehirn für die Tiefenwahrnehmung zu einem Gesamtbild kombiniert.

In diesem Zusammenhang wird als Kanaltrennung bei stereoskopischen Betrachtungsmethoden, die für die Augen nötige Trennung bzw. Zuordnung von linkem und rechtem Bild bezeichnet. Durch eine entsprechende Ausgestaltung der stereoskopischen Bildinformation, ggf. in Verbindung mit geeigneten Kanaltrennmitteln, wie beispielsweise einer Polarisations- und/oder Shutterbrille wird sichergestellt, dass jedes Auge lediglich das ihm zugehörige Bild sehen kann. Der Idealfall ist eine völlige Kanaltrennung, bei der das rechte Bild für das linke Auge vollkommen unsichtbar ist und umgekehrt. Eine im Rahmen des Wasserrutschen-Systems realisierbare Möglichkeit zur Realisierung eines 3D-Eindrucks ist eine Kanaltrennung mit, insbesondere zirkular, polarisiertem Licht, wobei der Benutzer in diesem Fall bevorzugt Kanaltrennmittel in Form einer Polarisationsfilterbrille trägt. Bei dem Polarisationsverfahren werden Bilder für das rechte und linke Auge bevorzugt gleichzeitig dargestellt, wobei die Kanaltrennmittel (Polbrille) bevorzugt nur jede zweite Zeile des Bildes passieren lassen und verteilen dadurch Halbbilder auf beide Augen. Eine besonders bevorzugte Technologie im Rahmen des Wasserrutschen-Systems ist die alternative Shuttertechnik. Bei dieser Methode werden die Bilder für das linke und das rechte Auge nacheinander dargestellt, wobei den vom Benutzer getragenen Kanaltrennmitteln, insbesondere einer Shutterbrille bevorzugt Steuerimpulse zugesendet werden. Eine Shutterbrille verdunkelt jeweils wechselseitig das eingebaute "Glas", insbesondere ein LCD-Glas um dafür Sorge zu tragen, dass jedes Auge nur das für sich bestimmte Bild sieht. Auch ist es möglich ein farbanaglyphisches Verfahren zu realisieren. Dabei werden zur Trennung der beiden bevorzugt gleichzeitig dargestellten Einzelbilder verschiedene Farbfilter in den Kanaltrennmitteln (insbesondere eine Rot-Grün-Brille) verwendet. Alternative stereoskopische Verfahren sind alternativ einsetzbar, insbesondere solche, die ohne zusätzliche von dem Benutzer zu tragende Kanaltrennmittel auskommt. In diesem Fall weist das Bildschirmmodul bevorzugt mehrere Bildpunktebenen auf, insbesondere in Form eines sogenannten Tensordisplays, die bevorzugt mit hohen Wiederholfrequenzen von bevorzugt über 200Hz, insbesondere von 240Hz oder 360Hz angesteuert werden.

Wie erwähnt ist es für einige der vorerwähnten Verfahren, insbesondere das bevorzugte Shutterverfahren und das ebenfalls bevorzugte Polarisationsverfahren notwendig, dass der Benutzer Kanaltrennmittel während des Rutschvorgangs in einem Bereich vor den Augen trägt. Im Falle des Shutterverfahrens werden diese bevorzugt mit einem mit der Darstellung synchronisierten Steuerimpuls beaufschlagt. Für die Besonderheit eines Wasserrutschen-Systems, bei welchem der Nutzer auf einem Wasserfilm auf der Rutschfläche in der Rutschrichtung gleitet hat es sich als vorteilhaft herausgestellt, wenn die Kanaltrennmittel sicher am Kopf des Benutzers, vorzugsweise durch Verspannen mit mindestens einem elastischen Band und/oder integriert in einen Helm oder ein Stirnband od.dgl. Fixiermittel am Kopf des Benutzers lösbar fixierbar sind. Unabhängig davon ist es von großem Vorteil, wenn die Kanaltrennmittel in der Art einer Taucher- oder Schwimmbrille ausgestaltet sind, also derart, dass sich diese über Dichtmittel, insbesondere ein Elastomermaterial am Kopf, insbesondere im Bereich des Gesichtes des Benutzers abstützen, um eine Beeinträchtigung der Bildwahrnehmung und insbesondere eines dreidimensionalen Effektes durch zwischen Augen und transluzenter Fläche (insbesondere Brillengläser) der Kanaltrennmittel zu vermeiden.

In diesem Zusammenhang wird auf die beanspruchte Verwendung von Kanaltrennmitteln, insbesondere in Form einer am Körper, bevorzugt am Kopf des Benutzers festlegbaren, insbesondere verspannbaren und/oder Dichtmittel zur wasserdichten Anlage am Körper, insbesondere am Kopf des Benutzers ausgebildeten Brille, bevorzugt einer Shutter- oder Polfilterbrille während des Rutschens einer mindestens ein Bildschirmmodul aufweisenden Wasserrutsche, insbesondere während der Benutzung eines nach dem Konzept der Erfindung ausgebildeten Wasserrutschen-Systems verwiesen.

Unabhängig davon, ob das mindestens eine Bildschirmmodul des Wasserrutschen-Systems zur Darstellung von 2D-Effekt- oder von stereoskopischen bzw. 3D-Effekt-Bildern ausgebildet und angesteuert ist, ist es gemäß einer Weiterbildung der Erfindung von Vorteil, wenn Detektionsmittel zum, insbesondere punktuellen oder fortlaufenden bzw. kontinuierlichen, Erfassen einer Position und/oder Geschwindigkeit (insbesondere Rutschgeschwindigkeit) des Benutzers aufweist und dass das Bildschirmmodul in Abhängigkeit des Positions- und/oder Geschwindigkeitssignals der Detektionsmittel ansteuerbar und/oder angesteuert sind, insbesondere derart, dass ein 2D- oder stereoskopischer Bildinhalt, insbesondere jeweils in Form eines Films oder alternativ eines Standbildes bzw. im Fall von stereoskopischer Darstellung Standbildern sich in Abhängigkeit des Positions- und/oder Geschwindigkeitssignals ändert. Auf diese Weise können besonders eindrucksvolle Effekte erzielt werden, die von der individuellen Position des Rutschenden entlang der Wasserrutsche und/oder von dessen Geschwindigkeit abhängig sind. Im einfachsten Fall kann die Position beispielsweise mit einer Lichtschranke erfasst werden. Auch ist es denkbar, mehrere Lichtschranken (oder andere Detektionssensoren) in der Rutschrichtung hintereinander anzuordnen, um eine gestuft fortlaufende Positionsinformation und/oder Geschwindigkeitsinformation zu erhalten. Alternativ besonders bevorzugt ist eine kontinuierliche Positionserfassung mit geeigneten Sensormitteln, beispielsweise einer Kamera oder alternativ und bevorzugt mehreren Kameras.

Die Erfindung führt auch auf ein Verfahren zum Betreiben eines nach dem Konzept der Erfindung ausgebildeten Wasserrutschensystems. Erfindungsgemäß ist dabei vorgesehen, dass das mindestens eine Bildschirmmodul derart angesteuert wird, dass von dessen matrixartig angeordneten Bildpunkten ein, insbesondere bewegtes vom Inneren der Rutschröhre sichtbares in der Umfangsrichtung gekrümmtes Bild dargestellt wird, welches noch weiter bevorzugt von einer Bildquelle, insbesondere einem Medienserver oder einem Videospieler bereitgestellt wird. Ganz besonders bevorzugt ist es, wenn sich das Bild über mehrere Bildschirmmodule erstreckt und somit ein, insbesondere bewegtes, Gesamtbild ergibt.

Besonders bevorzugt ist es, wenn im Rahmen des Verfahrens das mindestens eine Bildschirmmodul oder mehrere Bildschirmmodule zur Darstellung eines, insbesondere bewegten (Film), Gesamtbildes mit stereoskopischen Bildern zum Erzielen eines 3D-Effektes beim Benutzer versorgt bzw. angesteuert wird/werden. Dabei ist es in Abhängigkeit der verwendeten Technik bevorzugt, wenn der Benutzer während des Rutschens entsprechende Kanaltrennmittel (siehe Erläuterungen zuvor) während des Rutschvorgangs trägt bzw. diese dem Benutzer zur Verwendung bereitgestellt werden. Als besonders vorteilhaft hat es sich herausgestellt, wenn diese Kanaltrennmittel positionsfest am Körper getragen, d.h. lösbar am Körper des Benutzers fixiert werden können, insbesondere durch Verspannen mit mindestens einem Elastomermittel, insbesondere Elastomerband, oder alternativ sind die Kanaltrennmittel bevorzugt mit Dichtmitteln zur dichten Anlage am Körper, insbesondere am Kopf des Benutzers zum Verhindern eines Wassereintrittes in den Bereich zwischen Augen und transluzenter Fläche der Kanaltrennmittel ausgestattet.

In Weiterbildung der Erfindung ist mit Vorteil vorgesehen, dass auf dem mindestens einen Bildschirmmodul gleichzeitig oder zeitversetzt zwei, für das linke und rechte Auge eines Benutzers unterschiedliche (stereoskopische) Bilder, insbesondere in Form eines Films, zum Erzielen eines dreidimensionalen Seheindrucks dargestellt werden.

In Weiterbildung der Erfindung ist mit Vorteil vorgesehen, dass der Benutzer vor seinen Augen Kanaltrennmittel, insbesondere in Form einer Brille, trägt, mit denen die dem Bildschirmmodul dargestellten Bilder zu den Augen des Benutzers definiert zugeordnet werden.

In Weiterbildung der Erfindung ist mit Vorteil vorgesehen, dass die Position und/oder die Geschwindigkeit des Benutzers während des Rutschens erfasst und der von dem mindestens einen Displaymodul dargestellte Bildinhalt in Abhängigkeit einer erfassten Position und/oder Rutschgeschwindigkeit angepasst wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: einen Abschnitt einer als Röhrenrutsche ausgebildeten Wasserrutsche mit einer Mehrzahl von matrixartig angeordneten Bildschirmmodulen,
- Fig. 2: schematisch den elektronischen Aufbau eines Wasserrutschen-Sytems, und
- Fig. 3: in einer schematischen Seitenansicht den Aufbau eines Bildschirmmoduls für ein Wasserrutschensystem.

In den Figuren sind gleiche Elemente und Elemente mit der gleichen Funktion mit den gleichen Bezugszeichen gekennzeichnet.

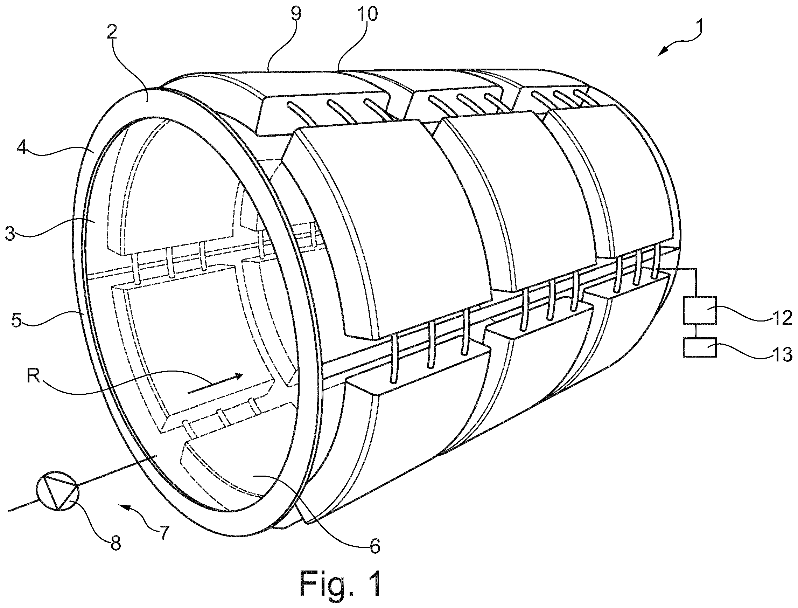

In Fig. 1 ist ausschnittsweise ein Wasserrutschen-System 1 gezeigt, dieses umfasst eine Rutschröhre 2 aus transluzentem oder transparentem Material. Die Rutschröhre 2 ist in an sich bekannter Weise aus mehreren in einer Rutschrichtung R hintereinander angeordneten Röhrenmodulen 3 zusammengesetzt, wobei jedes Röhrenmodul 3 wiederum aus mehreren, hier zwei Schalen 4, 5, konkret einer oberen Schale 4 und einer unteren Schale 5, montiert ist.

Die Rutschröhre 2 bildet in ihrem Inneren eine Rutschfläche 6 aus, die sich in der Rutschrichtung R erstreckt. Die Rutschfläche 6 wird mithilfe von Befeuchtungsmitteln 7 befeuchtet. Im konkreten Ausführungsbeispiel umfassen die Befeuchtungsmittel 7 Pumpmittel 8, welche einen Wasserstrom im Kreislauf fördert, wobei das Wasser in einem oberen Rutschenbereich eingeleitet und in einem unteren Rutschenbereich gesammelt und dann erneut für den Wasserkreislauf bereitgestellt wird.

Zu erkennen ist, dass auf einer Außenseite, der hier im Querschnitt beispielhaft kreisförmig konturierten Rutschröhre 2 eine Vielzahl von Bildschirmmodulen 10 angeordnet sind, die jeweils eine Vielzahl von nicht dargestellten Bildpunkten in Form von Hochleistungs-LEDs aufweisen. Die LEDs sind in Spalten und Reihen angeordnet, d.h. in Form einer Flächenmatrix, wobei die Bildpunkte einzeln ansteuerbar sind, um auf diese Weise beliebige, insbesondere auch bewegte Bilder darstellen zu können.

Jedes Bildschirmmodul weist eine Mindestanzahl von 15876 LEDs (Stück) auf.

Die Bildschirmmodule 10 sind nur um eine sich in der Rutschrichtung R erstreckende Achse, d.h. in Umfangsrichtung der Rutschröhre gekrümmt und weisen bevorzugt parallel zur Rutschrichtung R angeordnete Reihen von Bildpunkten auf. Die im Wesentlichen senkrecht dazu orientierten Spalte folgen der Krümmung der Außenseite der Rutschröhre.

Die Bildschirmmodule 10 liegen mit ihren Bildpunkten auf der gekrümmten Außenseite auf. Zu erkennen ist, dass die Bildschirmmodule 10 schalenartig ausgebildet sind und sich jeweils über einen Umfangswinkel von über 45° erstrecken sowie in der Rutschrichtung R über jeweils mindestens 0,5 m.

Aus der Anordnung gemäß Fig. 1 zu erkennen, dass eine Mehrzahl von Bildschirmmodulen 10, im konkreten Ausführungsbeispiel jeweils sechs in Umfangsrichtung nebeneinander, angeordnet sind. Gleichzeitig sind Bildschirmmodule 10 in der Rutschrichtung R hintereinander angeordnet, wodurch es möglich ist, durch entsprechende Aufteilung eines Ursprungsbildes dieses auf die Mehrzahl von matrixartig angeordneten Bildschirmmodulen aufzuteilen, so dass sämtliche Bildschirmmodule 10 oder eine Gruppe dieser Bildschirmmodule 10 ein Gesamtbild darstellen, was bedeutet, dass jedes der Bildschirmmodule einen Bildausschnitt zeigt.

In dem konkreten Ausführungsbeispiel sind jeweils zwei in Umfangsrichtung benachbarte Bildschirmmodule 10 sowie jeweils zwei in der Rutschrichtung benachbarte Module zueinander beabstandet - es ist auch eine Ausführungsform realisierbar und bevorzugt, bei der die in Umfangsrichtung benachbarten Bildschirmmodule und/oder die in der Rutschrichtung R hintereinander angeordneten Bildschirmmodule unmittelbar aneinander angrenzen, um somit einen geschlossenen Bildeindruck zu ermöglichen.

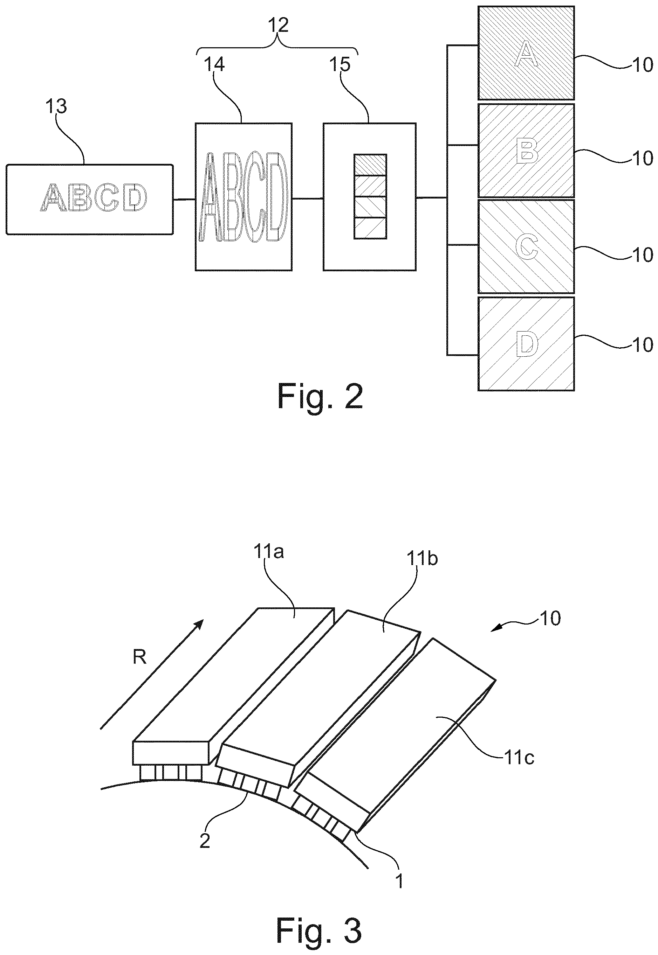

Zu erkennen ist die in Umfangsrichtung gekrümmte, schalenartige Ausgestaltung der Bildschirmmodule 10. Dies kann auf unterschiedliche Weise realisiert werden. So ist es denkbar, einen gekrümmten LED-Träger einzusetzen. Alternativ ist es möglich und bevorzugt, wie in Fig. 3 gezeigt, ein Bildschirmmodul 10 einzusetzen, welches mehrere Modulflächenabschnitte 11a bis 11c aufweist, wobei jeweils zwei benachbarte Modulflächenabschnitte 11a bis 11c einen Winkel zueinander aufspannen. Die Bildpunkte, insbesondere LEDs, jedes Modulflächenabschnittes 11a - 11c spannen jeweils eine (gerade bzw. nicht gekrümmte) Ebene auf. Im einfachsten Fall weist jedes Modul der Modulflächenabschnitte nur eine einzige sich in der Rutschrichtung R erstreckende Reihe von Bildpunkten auf. Bevorzugt weist jeder Modulflächenabschnitt R jedoch mehrere solcher sich in der Rutschrichtung R erstreckende parallele Reihen auf.

Besonders zweckmäßig ist eine Ausgestaltung, bei welcher die Modulflächenabschnitte 11a bis 11c gelenkig miteinander verbunden sind, um die Modulflächenabschnitte in der Umfangsrichtung um die Rutschröhre legen zu können - im Wesentlichen unabhängig von deren Durchmesser. Aufgrund der gelenkigen Verbindung ist eine Anpassung an unterschiedliche Durchmesser auf einfache Weise möglich.

In Fig. 1 sind Bildschirmmodule 10, wie erwähnt, über den gesamten Umfang der Rutschröhre 2 angeordnet. Denkbar ist auch eine alternative, nicht gezeigte Ausführungsform, bei der nur ein Teilumfangsabschnitt mit Bildschirmmodulen 10 versehen ist. Bevorzugt ist es dann, wenn in dem verbleibenden Abschnitt die Rutschröhre spiegelnd gestaltet ist, um somit den optischen Eindruck zu erwecken, dass mehr Bildschirmmodule vorgesehen sind, als dies tatsächlich der Fall ist. Beispielsweise ist es denkbar, nur die obere Schale 4 oder nur die untere Schale 5 mit Bildschirmmodulen 10 zu versehen und die jeweils andere Schale, zumindest abschnittsweise spiegelnd zu gestalten.

Aus der schematischen Darstellung gemäß Fig. 1 ist zu erkennen, dass die matrixartig angeordneten Bildschirmmodule angesteuert werden über Ansteuermittel 12, welche bevorzugt einen Videoprozessor enthalten. Die Ansteuermittel 12 werden mit einem Bildsignal, insbesondere einem Videosignal versorgt von einer Bildquelle 13, insbesondere einem Medienserver.

Ein konkreterer Aufbau der zuvor skizzierten Elektronik ergibt sich aus Fig. 2. Links in der Darstellung befindet sich die Bildquelle 13, die signalleitend mit den Ansteuermitteln 12 verbunden ist. Diese umfassen eine Videoprozessoreinheit 14 (Videoprozessor), welche wiederum signalleitend mit einer Videosplittereinheit 15 verbunden ist, die ein Gesamtbild aufteilt auf hier beispielhaft vier Bildschirmmodule 10. Diese Bildschirmmodule 10 können in Umfangsrichtung nebeneinander oder in der Rutschrichtung hintereinander angeordnet sein. Fig. 2 zeigt nur den grundsätzlichen schematischen Aufbau. Selbstverständlich kann die Videosplittereinheit 15 so ausgestaltet sein, dass diese eine gekrümmte Matrix von Bildschirmmodulen 10, wie diese beispielsweise in Fig. 1 gezeigt ist, versorgen. Besonders bevorzugt ist es, wenn die Bildschirmmodule über die Ansteuermittel 12 mit stereoskopischen Bildern zum Erzielen eines 3D-Effektes beim Benutzer versorgt bzw. angesteuert werden, wobei es auch hier bevorzugt ist, wenn ein Gesamtbild durch entsprechende Ansteuerung von mehreren Bildschirmmodulen über die Videosplittereinheit 15 realisiert ist.

Besonders zweckmäßig ist es, wenn nicht dargestellte Detektionsmittel zum Erfassen einer Position und/oder einer Geschwindigkeit des Benutzers vorgesehen sind und diese Detektionsmittel mittelbar oder unmittelbar signalleitend mit den Ansteuermitteln 12 verbunden sind, die einen Bildinhalt anpassen bzw. ändern in Abhängigkeit einer detektierten Position und/oder Geschwindigkeit.

### Bezugszeichenliste

- 1: Wasserrutschen-System
- 2: Rutsch röhre
- 3: Röhrenmodul
- 4: obere Schale
- 5: untere Schale
- 6: Rutschfläche
- 7: Befeuchtungsmittel
- 8: Pumpmittel
- 9: Außenseite
- 10: Bildschirmmodul
- 11a, b, c: Modulflächenabschnitte
- 12: Ansteuermittel
- 13: Bildquelle
- 14: Videoprozessoreinheit
- 15: Videosplittereinheit

- R: Rutschrichtung

## Patentansprüche

1. Wasserrutschen-System, mit einer, bevorzugt umfangsgeschlossenen, zumindest abschnittsweise transluzenten oder transparenten Rutschröhre (2), in welche eine mit Wasser benetzbare und sich in einer Rutschrichtung (R) erstreckende Rutschfläche (6) für einen Benutzer ausgebildet ist, wobei auf der Außenseite (9) der Rutschröhre (2) vom Inneren der Rutschröhre (2) her sichtbare Leuchtmittel zur Erzielung optischer Effekte im Inneren der Rutschröhre (2) angeordnet sind,
**dadurch gekennzeichnet,**
**dass** die Leuchtmittel gebildet sind von matrixartig angeordneten Bildpunkten, insbesondere LEDs, mindestens eines auf der Außenseite (9) der Rutschröhre (2) und sich über einen Umfangsabschnitt der Rutschröhre (2) erstreckenden, bevorzugt schalenartigen, Bildschirmmoduls (10), welches zur Darstellung von in der Umfangsrichtung gekrümmten, bevorzugt bewegten, zweidimensionalen und/oder stereoskopischen Bildern ansteuerbar und/oder angesteuert ist.

2. System nach Anspruch 1,
**dadurch gekennzeichnet,**
**dass** das mindestens eine Bildschirmmodul (10) mit einen Videoprozessor (14) aufweisenden Ansteuermitteln verbunden sind, die bevorzugt mit einer Bildquelle (13), insbesondere einem Medienserver und/oder einer Abspieleinrichtung, insbesondere einem Bluray-Spieler oder einen DVD-Spieler verbindbar und/oder verbunden ist.

3. System nach einem der vorhergehenden Ansprüche,
**dadurch gekennzeichnet,**
**dass** auf der Außenseite (9) der Rutschröhre (2) mehrere in Umfangsrichtung nebeneinander und/oder in Rutschrichtung (R) hintereinander angeordnete, schalenartig ausgebildete und/oder angeordnete Bildschirmmodule (10) vorgesehen sind.

4. System nach Anspruch 3,
**dadurch gekennzeichnet,**
**dass** die Ansteuermittel Videosplittermittel umfassen, um mit mehreren, vorzugsweise sämtlichen der Bildschirmmodule (10) ein, insbesondere bewegtes, Gesamtbild darzustellen.

5. System nach einem der Ansprüche 3 bis 4,
**dadurch gekennzeichnet,**
**dass** die Ansteuermittel derart ausgebildet sind, dass ein sich über sämtliche Bildpunkte eines Bildschirmmoduls (10) erstreckendes Bild und/oder ein sich über mehrere Bildpunkte erstreckender Bildabschnitt in Umfangsrichtung der Rutschröhre (2) und/oder in der Rutschrichtung (R) und/oder entgegen der Rutschrichtung (R) von Bildpunkt zu Bildpunkt und/oder von Bildschirmmodul (10) zu Bildschirmmodul (10), insbesondere mit gleichbleibenden oder alternativ wechselnden Farben, verschiebbar ist.

6. System nach einem der vorhergehenden Ansprüche,
**dadurch gekennzeichnet,**
**dass** das Bildschirmmodul (10) mehrere, insbesondere gelenkig, miteinander verbundene, und Modulflächenabschnitte, jeweils umfassend matrixartig oder in einer Reihe angeordnete Bildpunkte aufweist, wobei jeweils zwei benachbarte der Modulflächenabschnitte einen Winkel aufspannen.

7. System nach einem der vorhergehenden Ansprüche,
**dadurch gekennzeichnet,**
**dass** die Rutschröhre (2) zumindest in einem sich in der Rutschrichtung (R) erstreckenden Rutschabschnitt zur Erzeugung eines sich über den gesamten Umgang erstreckenden Bildes vollumfänglich mit mindestens einem Bildschirmmodul (10), vorzugsweise mehreren Bildschirmmodulen (10) versehen ist.

8. System nach einem der vorhergehenden Ansprüche,
**dadurch gekennzeichnet,**
**dass** die Rutschröhre (2) zumindest in einem sich in der Rutschrichtung (R) erstreckenden Rutschabschnitt nur über einen Teilumfang mit mindestens einem Bildschirmmodul (10), vorzugsweise mehreren Bildschirmmodulen (10) versehen ist.

9. System nach einem der vorhergehenden Ansprüche,
**dadurch gekennzeichnet,**
**dass** die Bildpunkte des mindestens einen Bildschirmmoduls an der Außenseite der Rutschröhre (2) unmittelbar zur Gewährleistung eines guten Wärmeübergangs anliegen.

10. System nach einem der vorhergehenden Ansprüche,
**dadurch gekennzeichnet,**
**dass** das Bildschirmmodul als stereoskopisches Display ausgebildet und mit zur gleichzeitigen oder zeitversetzten Darstellung von zwei, für das linke und rechte Auge eines Benutzers unterschiedlichen Bildern zum Erzielen eines dreidimensionalen Seheindrucks ansteuerbar und/oder angesteuert ist.

11. System nach Anspruch 10,
**dadurch gekennzeichnet,**
**dass** das System vom Benutzer während des Rutschens in der Rutschrichtung mitführbare Kanaltrennmittel zur definierten Zuordnung der auf dem Bildschirmmodul dargestellten Bildern zu den Augen des Benutzers aufweist.

12. System nach Anspruch 11,
**dadurch gekennzeichnet,**
**dass** die Kanaltrennmittel als vor den Augen eines Benutzers tragbare und, insbesondere am Kopf des Benutzers, bevorzugt mit Elastomermitteln, fixierbare, insbesondere verspannbare, Brille ausgebildet sind, wobei vorzugsweise die Brille Abdichtmittel, insbesondere in der Art wie bei einer Schwimm- oder Taucherbrille, zum dichtenden Anliegen am Benutzer zum Verhindern eines Wassereindringens in einen Bereich vor die Augen aufweist.

13. System nach einem der vorhergehenden Ansprüche,
**dadurch gekennzeichnet,**
**dass** das System Detektionsmittel zum Erfassen einer Position und/oder Geschwindigkeit des Benutzers aufweist und dass das Bildschirmmodul in Abhängigkeit eines Positions- und/oder Geschwindikeitssignal ansteuerbar und/oder angesteuert sind, insbesondere derart, dass ein Bildinhalt sich in Abhängigkeit einer ermittelten Position und/oder Geschwindigkeit ändert.

14. Verfahren zum Betreiben eines Wasserrutschen-Systems nach einem der vorhergehenden Ansprüche,
**dadurch gekennzeichnet,**
**dass** das mindestens eine Bildschirmmodul (10) derart angesteuert wird, dass von dessen matrixartig angeordneten Bildpunkten ein, insbesondere bewegtes, vom Inneren der Rutschröhre (2) sichtbares Bild dargestellt wird, bevorzugt ein von mehreren Bildschirmmodulen (10) dargestelltes Gesamtbild.

15. Verwendung eines Wasserrutschen-Systems nach einem der Ansprüche 1 bis 13, wobei Kanaltrennmitteln zur definierten Zuordnung der auf dem Bildschirmmodul dargestellten Bildern zu den unterschiedlichen Augen des Benutzers, insbesondere in Form einer am Körper des Benutzers festlegbaren und/oder Dichtmittel zur wasserdichten Anlage am Körper des Benutzers ausgebildeten Brille, bevorzugt einer Shutter- oder Polfilterbrille, während der Benutzung des Wasserrutschen-Systems verwendet werden.

## Claims

1. Water slide system having a, preferably circumferentially-closed, at least in sections translucent or transparent slide tube (2), in which a slide surface (6) that can be wetted with water and extends in a slide direction (R) is configured for a user, wherein lighting means visible from the inside of the slide tube (2) are arranged on the outer surface (9) of the slide tube (2) for obtaining optical effects inside the slide tube (2),
**characterized in that**
the lighting means are formed of pixels arranged like a matrix, in particular LEDs, of at least one, preferably curved display module (10) extending on the outer surface (9) of the slide tube (2) and over a circumferential section of the slide tube (2), which is actuatable and/or actuated for displaying two-dimensional and/or stereoscopic, preferably moving, images bent in the circumferential direction.

2. System according to claim 1,
**characterized in that**
the at least one display module (10) is connected to actuating means comprising a video processor (14), which is connectable and/or are connected preferably to an image source (13), in particular a media server and/or a player, in particular a Blu-ray player or a DVD player.

3. System according to one of the preceding claims,
**characterized in that**
multiple display modules (10), which are configured and/or arranged in a curved manner and are arranged next to one another in the circumferential direction and/or one after another in the slide direction (R) are provided on the outer surface (9) of the slide tube (2).

4. System according to claim 3,
**characterized in that**
the actuating means include video splitter means to display a, in particular moving overall image with multiple, preferably all of the display modules (10).

5. System according to one of claims 3 to 4,
**characterized in that**
the actuating means are configured such that an image extending over all pixels of a display module (10) and/or an image section extending over multiple pixels is displaceable in the circumferential direction of the slide tube (2) and/or in the slide direction (R) and/or opposite to the slide direction (R) from pixel to pixel and/or from display module (10) to display module (10), in particular with unchanging or alternatively changing colors.

6. System according to one of the preceding claims,
**characterized in that**
the display module (10) comprises multiple, connected to one another in particular jointly, and module surface sections, each including pixels arranged like a matrix or in a row, wherein in each case two neighboring module surface sections of the module surface sections span an angle.

7. System according to one of the preceding claims,
**characterized in that**
the slide tube (2) is provided with at least one display module (10) around the entire circumference, preferably multiple display modules (10) at least in one slide section extending in the slide direction (R) for generating an image extending over the entire circumference.

8. System according to one of the preceding claims,
**characterized in that**
the slide tube (2) is provided with at least one display module (10), preferably multiple display modules (10), over a part of the circumference at least in one slide section extending in the slide direction (R).

9. System according to one of the preceding claims,
**characterized in that**
the pixels of the at least one display module but against the outer surface of the slide tube (2) directly for ensuring a good heat transition.

10. System according to one of the preceding claims,
**characterized in that**
the display module is configured as a stereoscopic display and is actuatable or actuated with two different images for the left and right eye of the user for simultaneously or time-delayed displaying for achieving a three-dimensional visual impression.

11. System according to claim 10,
**characterized in that**
the system comprises channel separation means which can be carried along by a user while sliding in the slide direction for associating the images displayed on the display module to the eyes of the user in a defined manner.

12. System according to claim 11,
**characterized in that**
the channel separation means are configured as glasses to be worn in front of the eyes of the user and, in particular on the head of the user, preferably fixable, in particular braceable with elastomer means, wherein preferably the glasses comprise sealing means, in particular in the type of goggles or diving goggles, for abutting the user in a sealing manner in order to prevent water from entering an area in front of the eyes.

13. System according to one of the preceding claims,
**characterized in that**
the system comprises detection means for detecting a position and/or speed of a user and **in that** the display module is actuatable and/or is actuated depending on a position signal and/or speed signal, in particular such that an image content changes depending on a detected position and/or speed.

14. Method for operating a water slide system according to one of the preceding claims,
**characterized in that**
the at least one display module (10) is actuated such that, by the pixels thereof arranged like a matrix, an, in particular moving image visible from inside the slide tube (2) is displayed, preferably an overall image displayed by multiple display modules (10).

15. Use of a water slide system according to one of claims 1 to 13, wherein channel separation means for associating the images displayed on the display module to the eyes of the user in a defined manner, in particular in the form of glasses fixable on the body of the user and/or sealing means for water-tight abutment on a body of the user, preferably shutter glasses or pole filter glasses, are used during the use of the water slide system.

## Revendications

1. Système de toboggan aquatique avec un tube de glissade (2), de préférence fermé sur sa périphérie, au moins translucide ou transparent par tronçons, dans lequel est conçue une surface glissante (6) mouillable avec de l'eau et s'étendant dans une direction de glisse (R) pour un utilisateur, sur la face extérieure (9) du tube de glissade (2) étant placés des moyens lumineux visibles à partir de l'intérieur du tube de glissade (2), destinés à obtenir des effets optiques à l'intérieur du tube de glissade (2), **caractérisé en ce que** les moyens lumineux sont formés par des pixels placés en forme de matrice, notamment de LED, d'au moins un module d'écran (10) s'étendant sur la face extérieure (9) du tube de glissade (2) et sur un tronçon périphérique du tube de glissade (2), de préférence en forme de coque, qui est actionnable et/ou actionné pour représenter des images curvilignes dans la direction périphérique, de préférence en mouvement, bidimensionnelles et/ou stéréoscopiques.

2. Système selon la revendication 1, **caractérisé en ce que** l'au moins un module d'écran (10) est relié avec des moyens d'actionnement comportant un vidéo-processeur (14) qui peuvent être reliés et/ou qui sont reliés avec une source d'images (13), notamment un serveur média et/ou un système de lecture, notamment un lecteur Blu-ray ou un lecteur DVD.

3. Système selon l'une quelconque des revendications précédentes, **caractérisé en ce que** sur la face extérieure (9) du tube de glissade (2) sont prévus plusieurs modules d'écrans (10) placés côté à côte dans la direction périphérique et/ou les uns derrière les autres dans la direction de glisse (R), conçus et/ou placés en forme de coques.

4. Système selon la revendication 3, **caractérisé en ce que** les moyens d'actionnement comprennent des répartiteurs vidéo, pour représenter avec plusieurs, de préférence avec l'ensemble des modules d'écrans (10) une image globale, en particulier en mouvement.

5. Système selon l'une quelconque des revendications 3 ou 4, **caractérisé en ce que** les moyens d'actionnement sont conçus de telle sorte qu'une image s'étendant sur l'ensemble des pixels d'un module d'écran (10) et/ou une partie d'image s'étendant sur plusieurs pixels soit déplaçable dans la direction périphérique du tube de glissade (2) et/ou dans la direction de glisse (R) et/ou à l'encontre de la direction de glisse (R), de pixel à pixel et/ou de module d'écran (10) à module d'écran (10), notamment avec des couleurs constantes ou changeantes.

6. Système selon l'une quelconque des revendications précédentes, **caractérisé en ce que** le module d'écran (10) comporte plusieurs pixels, reliés les uns aux autres, notamment de manière articulée et comprenant chacun des parties de surface de module, placés en forme de matrice ou sur une rangée, deux parties de surface de module voisines formant un angle.

7. Système selon l'une quelconque des revendications précédentes, **caractérisé en ce qu'**au moins sur une portion de glisse s'étendant dans la direction de glisse (R), pour créer une image s'étendant sur l'ensemble de la périphérie, le tube de glissade (2) est muni sur toute sa périphérie d'au moins un module d'écran (10), de préférence de plusieurs modules d'écrans (10).

8. Système selon l'une quelconque des revendications précédentes, **caractérisé en ce qu'**au moins sur une portion de glisse s'étendant dans la direction de glisse (R), le tube de glissade (2) n'est muni que sur une partie de la périphérie d'au moins un module d'écran (10), de préférence de plusieurs modules d'écrans (10).

9. Système selon l'une quelconque des revendications précédentes, **caractérisé en ce que** les pixels de l'au moins un module d'écran sont directement adjacents sur la face extérieure du tube de glissade (2), pour assurer un bon transfert thermique.

10. Système selon l'une quelconque des revendications précédentes, **caractérisé en ce que** le module d'écran est conçu sous la forme d'un afficheur stéréoscopique et est actionnable et/ou actionné avec deux images différentes pour l'oeil gauche et l'oeil droit d'un utilisateur, destinées à être représentées simultanément ou en décalage dans le temps, pour obtenir une impression visuelle tridimensionnelle.

11. Système selon la revendication 10, **caractérisé en ce que** le système comporte des moyens séparateurs de canaux, embarquables par l'utilisateur pendant la glissade dans la direction de glisse, pour l'affectation définie des images représentées sur le module d'écran aux yeux de l'utilisateur.

12. Système selon la revendication 11, **caractérisé en ce que** les moyens séparateurs de canaux sont conçus sous la forme de lunettes susceptibles d'être portées à l'avant des yeux d'un utilisateur et notamment d'être fixées sur la tête de l'utilisateur, de préférence avec des moyens élastomères, notamment susceptibles d'être contraintes, les lunettes comportant de préférence des moyens d'étanchéité, notamment à la manière de lunettes de natation ou de plongée pour l'application étanche sur l'utilisateur, pour éviter une pénétration d'eau dans une région antéoculaire.

13. Système selon l'une quelconque des revendications précédentes, **caractérisé en ce que** le système comporte des moyens de détection destinés à détecter une position et/ou une vitesse de l'utilisateur et **en ce que** le module d'écran est actionnable et/ou actionné en fonction d'un signal de position et/ou de vitesse, notamment de telle sorte qu'un contenu d'image se modifie en fonction d'une position et/ou d'une vitesse déterminée.

14. Procédé destiné à faire fonctionner un toboggan aquatique selon l'une quelconque des revendications précédentes, **caractérisé en ce qu'**on actionne l'au moins un module d'écran (10) de telle sorte que ses pixels placés en forme de matrice représentent une image, notamment en mouvement, visible à partir de l'intérieur du tube de glissade (2), de préférence une image globale représentée par plusieurs modules d'écrans (10).

15. Utilisation d'un toboggan aquatique selon l'une quelconque des revendications 1 à 13, des moyens séparateurs de canaux étant utilisés pendant l'utilisation du toboggan aquatique pour l'association définie des images représentées sur le module d'écran aux différents yeux de l'utilisateur, notamment sous la forme de lunettes susceptibles d'être immobilisées sur le corps de l'utilisateur et/ou de moyens d'étanchéité destinés à être appliqués sur le corps de l'utilisateur, de préférence de lunettes à obturation ou de lunettes à verres polarisés.
